# EUROPÄISCHE PATENTSCHRIFT

(11) **EP 1 616 120 B1**
(45) Veröffentlichungstag und Bekanntmachung des Hinweises auf die Patenterteilung: **09.05.2012**
(21) Anmeldenummer: 04728174.6
(22) Anmeldetag: 19.04.2004
(51) Int. Cl.: F16L 9/12

(54) **KUNSTSTOFF/METALL-VERBUNDROHR**
PLASTIC/METAL COMPOSITE TUBE
TUBE COMPOSITE MATIERE PLASTIQUE/METAL

(30) Priorität: 19.04.2003 DE 10318328
(43) Veröffentlichungstag der Anmeldung: 18.01.2006
(73) Patentinhaber: Uponor Innovation AB, 513 81 Fristad (SE)
(72) Erfinder: HÖFFKER, Bruno, 48432 Rheine (DE); EWERING, Franz-Josef, 48607 Ochtrup (DE)
(74) Vertreter: Epping - Hermann - Fischer
(86) Internationale Anmeldenummer: PCT/EP2004/004135
(87) Internationale Veröffentlichungsnummer: WO 2004/094887

(56) Entgegenhaltungen:
- DE-A- 3 242 271
- FR-A- 1 318 307
- GB-A- 1 472 630

## Beschreibung

Die Erfindung betrifft ein Kunststoff/Metall-Verbundrohr, insbesondere ein Kunststoff/Metall-Verbundrohr mit Aluminiummantel.

Für Heizungen zu verwendende Rohre müssen für Sauerstoff undurchlässig sein. Neben Metallrohren (z. B. aus Kupfer) werden auch Rohre aus Kunststoff, z. B. Polyethylen (PE) eingesetzt. Die dabei verwendeten Kunststoffe sind jedoch für Sauerstoff durchlässig, weshalb sie mit einer (Sauerstoff-) DiffusionsSperrschicht versehen werden, die im Allgemeinen das das Fluid führende Kunststoff-Basisrohr von außen umgeben. Als Material für die DiffusionsSperrschicht kommt zum Beispiel EVOH in Frage. Beispiele für derartige Kunststoffrohre finden sich in DE 296 06 533 U1 und DE 298 24 837 U1.

Neben Rohren aus ausschließlich Kunststoffmaterialien kommen auch Kunststoff/Metall-Verbundrohre zur Anwendung, die ein Basisrohr aus einem Kunststoff, das das Fluid führt, und eine das Basisrohr umgebende Metallschicht aufweisen. Diese Metallschicht ist zumeist ein dünnes, um das Basisrohr gelegtes Aluminiumband, das Längsnaht verschweißt (z.B. EP 0 639 411 B1 und EP 0 823 867 B1) oder verklebt (z.B. DE 301 61 34 A1 und EP 0 746 716 B1) ist. Die Verschweißung einer Längsnaht ist sehr aufwändig, da das Aluminiumband sehr genau gefertigt und präzise auf dem Basisrohr platziert werden muss.

Alternativ kann das Aluminiumband auch um das Rohr gewickelt sein, wobei es im Regelfall überlappend verklebt ist oder verschweißt ist (z.B. DE 324 22 71 C2), um die Sauerstoffundurchlässigkeit des Rohres zu gewährleisten. Für eine Verklebung muss das Aluminiumband mit einem Haftvermittler beschichtet werden. Bei der Herstellung des Rohres muss sichergestellt sein, dass das Aluminiumband sich überlappt und im Überlappungsbereich verklebt ist. Dies zwingt zu einem komplizierten Herstellungsverfahren und zu einem relativ hohen Verbrauch von Aluminiumband pro Rohr.

Der Erfindung liegt die Aufgabe zugrunde, ein Kunststoff/Metall-Verbundrohr zu schaffen, dessen Herstellung, insbesondere bezüglich des Aufbringens der Metallschicht, vereinfacht ist.

Diese Aufgabe wird gemäß der Erfindung mit den Merkmalen des Anspruchs 1 gelöst.

Nach der Erfindung besteht das Kunststoff/Metall-Verbundrohr aus einem Kunststoff-Basisrohr, einer das Basisrohr umgebenden Sauerstoffdiffusions-Sperrschicht (z.B. aus EVOH), einer auf die Sperrschicht aufgebrachten Schicht aus Haftvermittlermaterial und einem um die Schicht aus Haftvermittlermaterial gelegten und sich dabei nicht überlappenden Metallband aus Aluminium. Da die Sauerstoffdiffusions-Sperrschicht bereits undurchlässig für Sauerstoff ist, können die Materialeigenschaften und die Anordnung des Metallbandes vollständig von mechanischen Gesichtspunkten bestimmt werden, ohne dass bei dem Legen des Metallbandes um das Basisrohr auf Dichtigkeit gegenüber Sauerstoff geachtet werden muss.

Gemäß dem erfindungsgemäßen Kunststoff/Metall-Verbundrohr kömmt der Metallschicht keine Diffusionssperrschicht-Funktion zu. Damit brauchen die Kanten des Metallbands nicht vollständig miteinander verbunden zu sein. Von daher ist es auch möglich, dass das Metallband gelocht ist.

Die Verklebung des Metallbandes mit dem Innenrohr führt zu einer geringeren Längenausdehnung des Innenrohres, was die empfindliche Sauerstoffdiffusions-Sperrschicht zusätzlich schützt. Darüber hinaus wird das Rohr plastisch formbar und lässt sich somit einfacher verlegen. Abhängig von den Anforderungen an das Rohr kann es bereits ausreichend sein, wenn das Metallband mit geringem gegenseitigern Abstand aufgebracht ist, so dass zwischen den einzelnen Abschnitten des Metallbandes ein Freiraum besteht.

Mithin werden also mit dem erfindungsgemäßen Ansatz, wie bei Kunststoff/Metall-Verbundrohren an sich üblich, die Vorteile eines Kunststoffrohres (z.B. Korrosionsbeständigkeit) mit denen eines Metallrohres (z.B. plastische Verformbarkeit) vereinigt, jedoch ohne dass der Metallschicht (alleinig) die Funktion der Sauerstoffdichtigkeit zukommen muss.

Die zwischen der Sauerstoffdiffusions-Sperrschicht und dem Metallband angeordnete Schicht aus Haftvermittlermaterial erfüllt eine Doppelfunktion. Sie verbindet das Metallband mit der Sauerstoffdiffusions-Sperrschicht und schützt diese gleichzeitig vor einer Rissbildung, indem sie die spröde Sauerstoffdiffusions-Sperrschicht vollständig umhüllt.

Nachfolgend werden Ausführungsbeispiele der Erfindung anhand der Zeichnungen näher erläutert. Es zeigen:
- Fig. 1: einen Querschnitt durch ein Kunststoff/Metall-Verbundrohr gemäß der Erfindung,
- Fig. 2: ein Kunststoff/Metall-Verbundrohr mit beabstandet gewickeltem Metallband, und
- Fig.3: ein Kunststoff/Metall-Verbundrohr mit längs aufgebrachtem Metallband.

Bei der Betrachtung der Figuren ist zu beachten, dass die dargestellten Schichtdicken und Abstände weder relativ zueinander noch absolut maßstabsgerecht gezeichnet sind.

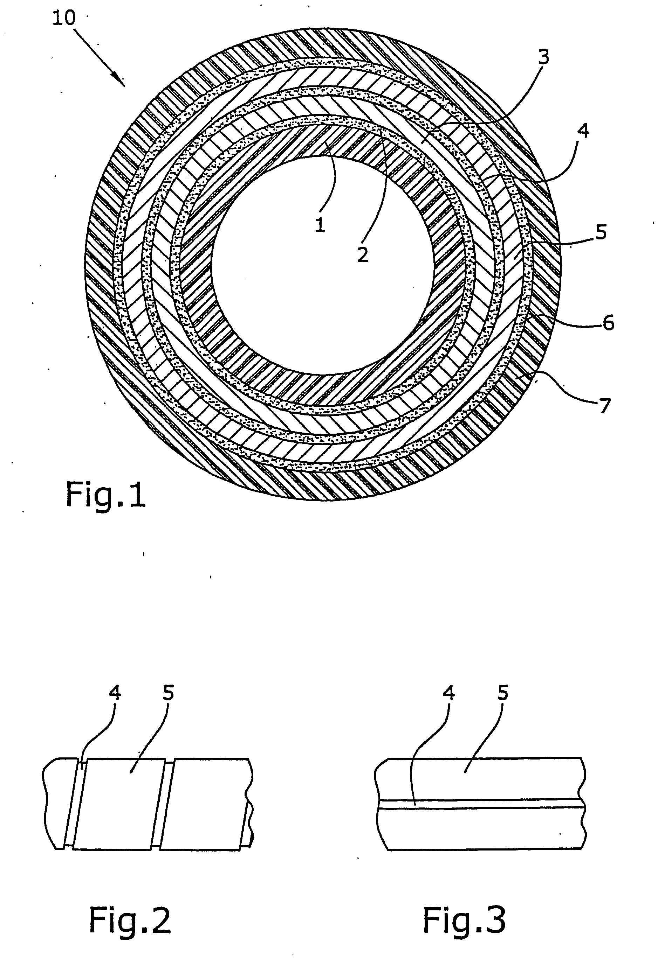

Das in Fig. 1 gezeigte Kunststoff/Metall-Verbundrohr 10 baut auf einem Kunststoff-Basisrohr 1 (z.B. aus PE) zum Führen von Fluiden auf, das von einer Schicht aus Haftvermittlermaterial 2 zur Ankopplung einer Sauerstoffdiffusions-Sperrschicht 3 aus Kunststoff (z. B. EVOH, Ethylen-Vinyl-Alkohol) umgeben ist.

Das Basisrohr 1, das Haftvermittlermaterial 2 und die Sauerstoffdiffusions-Sperrschicht 3 bilden bereits ein für Sauerstoff undurchlässiges (Innen-)Rohr, das jedoch sehr empfindlich gegenüber mechanischen Belastungen ist.

Auf die Sauerstoffdiffusions-Sperrschicht 3 ist eine weitere Schicht aus Haftvermittlermaterial 4 aufgebracht, welches zum einen zur Ankopplung eines Metallbandes 5, hier eines Aluminiumbandes mit einer Dicke d₅ von z. B. 0,15 bis 0,6 mm, und zum anderen zum Schutz der Sauerstoffdiffusions-Sperrschicht 3 dient.

EVOH-Material hat um so bessere Diffusionssperreigenschaften, je trockener es ist. Das Material ist aber mit zunehmender Trockenheit spröder und damit brüchiger. Die Schicht aus Haftvermittlermaterial 4 schützt die Sauerstoffdiffusions-Sperrschicht 3 indem sie das EVOH-Material umschließt und damit zusammenhält, wodurch eine Rissbildung verhindert wird.

In den Fign. 2 und 3 sind zwei Alternativen dafür dargestellt, wie das Metallband 5 um die Schicht aus Haftvermittlermaterial 4 gelegt ist, ohne dass sich Abschnitte des Metallbandes 5 gegenseitig überlappen.

Das Metallband 5 kann wie, in Fig. 2 dargestellt, mit geringem gegenseitigen Abstand gewickelt sein. Es ist auch möglich, das Metallband 5 auf Stoß zu wickeln, so dass die Kanten des Metallbands 5 direkt aneinander liegen.

Wie in Fig. 3 gezeigt, kann das Metallband 5 auch längs aufgebracht sein und zwar wiederum mit geringem gegenseitigen Abstand oder auf Stoß aneinanderliegend.

Die Breite des Metallbands 5 ist vorzugsweise derart bemessen, dass die Kanten des aufgebrachten Metallbands 5 sich gerade nicht berühren. So bleiben Toleranzen für das Maß des Metallbands 5 und bei der Fertigung, die ein Überlappen des Metallbands 5 verhindern, aber auch sicher stellen, dass die Ränder des Metallbands 5 dicht benachbart sind. Das Aufbringen des Metallbands 5 gestaltet sich einfach, da es weder Kante an Kante noch überlappend aufgebracht werden muss. Es braucht lediglich mit einem geringen - nicht zwangsläufig konstanten - Abstand der Kanten zueinander verlegt werden.

Auf das Metallband 5 kann, wie in Fig. 1 zu sehen ist, eine weitere Schicht aus Haftvermittlermaterial 6 aufgebracht sein, die von einem abschließenden Außenmantel 7 umgeben ist. Der Außenmantel 7 besteht aus einem Kunststoff wie PE oder PEX und hat eine Schichtdicke, die etwa das 1,5 bis 2-fache der Dicke des Metallbandes 5 beträgt.

Der Außenmantel 7 ist in Material und Dicke derart beschaffen, dass das Metallband 5 wirkungsvoll vor Korrosion und Beschädigung geschützt wird.

## Patentansprüche

1. Kunststoff/Metall-Verbundrohr mit
- einem Basisrohr (1) aus Kunststoff,
- einer das Basisrohr (1) umgebenden Sauerstoffdiffusions-Sperrschicht (3) aus Kunststoff, insbesondere aus EVOH (Ethylen-Vinyl-Alkohol), die für Sauerstoff undurchlässig ist,
- einer auf die Sauerstoffdiffusions-Sperrschicht (3) aufgebrachten Schicht aus einem Haftvermittlermaterial (4), und
- einem um die Schicht aus dem Haftvermittlermaterial (4) gelegten und sich nicht überlappenden Metallband (5) aus Aluminium,
- wobei dem um die Schicht aus dem Haftvermittlermaterial (4) gelegten Metallband (5) keine Diffusionssperrschicht-Funktion zukommt.

2. Kunststoff/Metall-Verbundrohr nach Anspruch 1, **dadurch gekennzeichnet, dass** die Kanten des Metallbandes (5) auf Stoß aneinander liegen.

3. Kunststoff/Metall-Verbundrohr nach Anspruch 1, **dadurch gekennzeichnet, dass** die Kanten des Metallbandes (5) geringfügig voneinander beabstandet sind.

4. Kunststoff/Metall-Verbundrohr nach einem der Ansprüche 1 bis 3, **gekennzeichnet durch** einen auf das Metallband (5) aufgebrachten Kunststoff-Außenmantel (7).

5. Kunststoff/Metall-Verbundrohr nach Anspruch 4, **dadurch gekennzeichnet, dass** zwischen dem Metallband (5) und dem Kunststoff-Außenmantel (7) eine Schicht aus einem Haftvermittlermaterial (6) angeordnet ist.

6. Kunststoff/Metall-Verbundrohr nach einem der Ansprüche 1 bis 5, **dadurch gekennzeichnet, dass** das Metallband (5) eine Dicke (d₅) von 0,15 bis 0,6 mm aufweist.

7. Kunststoff/Metall-Verbundrohr nach einem der Ansprüche 4 bis 6, **dadurch gekennzeichnet, dass** die Dicke (d₇) des Außenmantels (7) das Doppelte der Dicke (d₅) des Metallbandes (5) beträgt.

8. Kunststoff/Metall-Verbundrohr nach einem der Ansprüche 1 bis 7, **dadurch gekennzeichnet, dass** das Metallband (5) gelocht ist.

## Claims

1. A plastic/metal composite tube, comprising
- a base tube (1) made of plastics,
- an oxygen diffusion blocking layer (3) made of plastics, in particular made of EVOH (ethylene-vinyl-alcohol), which surrounds the base tube (1) and is impermeable to oxygen,
- a layer of an adhesion promoter material (4) applied on the oxygen diffusion blocking layer (3), and
- a non-overlapping metal band (5) of aluminum wrapped around the layer of the adhesion promoter material (4),
- the metal band (5) wrapped around the layer of the adhesion promoter material (4) not performing the function of a diffusion blocking layer.

2. The plastic/metal composite tube according to claim 1, **characterized in that** the edges of the metal band (5) contact each other in abutting manner.

3. The plastic/metal composite tube according to claim 1, **characterized in that** the edges of the metal band (5) are slightly spaced from each other.

4. The plastic/metal composite tube according to any of the claims 1 to 3, **characterized by** a plastic outer sheath (7) applied on the metal band (5).

5. The plastic/metal composite tube according to claim 4, **characterized in that** a layer of an adhesion promoter material (6) is arranged between the metal band (5) and the plastic outer sheath (7).

6. The plastic/metal composite tube according to any of the claims 1 to 5, **characterized in that** the metal band (5) has a thickness (dₛ) ranging from 0.15 to 0.6 mm.

7. The plastic/metal composite tube according to any of the claims 4 to 6, **characterized in that** the thickness (d₇) of the plastic outer sheath (7) is twice the thickness (dₛ) of the metal band (5).

8. The plastic/metal composite tube according to any of the claims 1 to 7, **characterized in that** the metal band (5) is perforated.

## Revendications

1. Tuyau composite plastique/métal, comprenant
- un tube de base (1) en plastique,
- une couche barrière anti-diffusion d'oxygène (3) en plastique, en particulier en EVOH (alcool d'éthylène vinylique), entourant le tube de base (1) et imperméable à l'oxygène,
- une couche en matériau promoteur d'adhérence (4) appliquée sur la couche barrière anti-diffusion d'oxygène (3), et
- une bande métallique (5) en aluminium posée autour de la couche en matériau promoteur d'adhérence (4) et ne se chevauchant pas,
- aucune fonction de couche barrière anti-diffusion n'étant assignée à la bande métallique (5) en aluminium posée autour de la couche en matériau promoteur d'adhérence (4).

2. Tuyau composite plastique/métal selon la revendication 1, **caractérisé en ce que** les bords de la bande métallique (5) sont posés bout à bout l'un contre l'autre.

3. Tuyau composite plastique/métal selon la revendication 1, **caractérisé en ce que** les bords de la bande métallique (5) sont légèrement écartés l'un de l'autre.

4. Tuyau composite plastique/métal selon l'une des revendications 1 à 3, **caractérisé par** une enveloppe extérieure en plastique (7) appliquée sur la bande métallique (5).

5. Tuyau composite plastique/métal selon la revendication 4, **caractérisé en ce qu'**une couche en matériau promoteur d'adhérence (6) est disposée entre la bande métallique (5) et l'enveloppe extérieure en plastique (7).

6. Tuyau composite plastique/métal selon l'une des revendications 1 à 5, **caractérisé en ce que** la bande métallique (5) présente une épaisseur (dₛ) de 0,15 à 0,6 mm.

7. Tuyau composite plastique/métal selon l'une des revendications 4 à 6, **caractérisé en ce que** l'épaisseur (d₇) de l'enveloppe extérieure (7) est le double de l'épaisseur (dₛ) de la bande métallique (5).

8. Tuyau composite plastique/métal selon l'une des revendications 1 à 7, **caractérisé en ce que** la bande métallique (5) est perforée.
